# DEMANDE DE BREVET EUROPEEN

(11) **EP 2 889 527 A2**
(43) Date de publication de la demande: **01.07.2015**
(21) Numéro de dépôt: 14198920.2
(22) Date de dépôt: 18.12.2014
(51) Int. Cl.: F17C 1/06, F17C 1/16

(54) **Réservoir destiné au stockage de milieux liquides ou gazeux sous pression**

(30) Priorité: 20.12.2013 FR 1363266
(71) Demandeur: EADS Composites Aquitaine, 33160 Salaunes (FR)
(72) Inventeur: Fourage, Guillaume, 33200 Bordeaux (FR); Lagunegrand, Laurent, 33300 Bordeaux (FR); De Pardieu, Jean, 33200 Bordeaux (FR)
(74) Mandataire: Coquel, Jean-Marc

(57) **Abrégé**

L'invention concerne un réservoir destiné au stockage de milieux liquides ou gazeux sous pression, comprenant une enveloppe (14) intérieure définissant une chambre de stockage, ladite enveloppe (14) intérieure comprenant une ouverture (15), une embase (13) placée au niveau de ladite ouverture (15) pour assurer la connexion intérieur/extérieur dudit réservoir et une enveloppe (16) de renforcement mécanique entourant au moins ladite enveloppe (14) intérieure.

Selon l'invention,
- ladite embase (13) comprend une première (22, 25) portion d'embase solidaire uniquement de ladite enveloppe (14) intérieure et une deuxième (23, 27) portion d'embase solidaire uniquement de ladite enveloppe (16) de renforcement mécanique, lesdites première et deuxième portions d'embase étant distinctes et non liées entre elles,
- l'espace séparant lesdites portions d'embase formant un évent assurant l'évacuation des gaz ayant traversé la paroi de l'enveloppe (14) intérieure.

## Description

### Domaine de l'invention

La présente invention concerne un réservoir destiné au stockage de milieux liquides ou gazeux sous pression.

L'invention concerne encore un moyen de transport tel qu'une automobile ou un aéronef, équipé d'au moins un tel réservoir.

### Arrière-plan technologique

Le pouvoir calorifique élevé de l'hydrogène et sa conversion en vapeur d'eau, donc non polluante, lorsqu'il est utilisé dans un moteur, font de ce gaz une énergie alternative prometteuse aux énergies fossiles. De nombreuses recherches sont actuellement menées pour assurer un transport en grands volumes et de manière sûr de l'hydrogène dans l'objectif d'alimenter en carburant des véhicules hybrides.

Pour leur transport, de tels gaz sont typiquement comprimés dans des réservoirs destinés au stockage de gaz sous haute pression (entre 200 et 1000 bars par exemple), le plus souvent cylindriques, lesquels sont fermés par des dômes pourvus ou non chacun d'un embout.

Pour résister aux fortes pressions des gaz ainsi stockés, ces réservoirs comportent un liner placé dans une enveloppe de renfort réalisée en matériau composite. Classiquement, le dépôt des fibres et de la résine pour former l'enveloppe de renfort est réalisé par un enroulement filamentaire.

Les réservoirs peuvent ainsi être de plusieurs types, soit à liner métallique recouvert d'une couche de composite sur sa partie centrale (Type II), soit à liner métallique entièrement recouvert de composite (Type III), soit à liner en matière plastique recouvert de composite (Type IV).

Les principaux avantages des liners thermoplastiques par rapport aux liners métalliques résident dans leur poids moins élevé et en une tenue mécanique supérieure aux sollicitations cycliques.

Toutefois, on a observé pour les réservoirs de Type IV, des dégradations de l'enveloppe par déformation permanente du liner polymère lorsque la vitesse de vidage était trop élevée. Ce phénomène est communément appelé « collapse » ou « blistering » du liner.

Une des raisons possibles de ce phénomène est la relative perméabilité au gaz stocké du matériau polymère constitutif du liner. Une partie du gaz initialement stocké à l'intérieur du liner passe ainsi au travers de la paroi du liner.

Or, dans les réservoirs conventionnels, le liner est collé à l'enveloppe de renfort ce qui empêche l'évacuation vers l'extérieur du gaz ayant traversé la paroi du liner, qui se trouve dès lors piégé. On assiste à la formation de poches de gaz entre la surface externe du liner et la surface intérieure de l'enveloppe de renfort.

Lors du vidage du réservoir, une différence de pression peut se créer entre l'interstice comportant les poches de gaz et le volume intérieur du liner conduisant à la formation de cloques.

Ces cloques disparaissent après rechargement du réservoir pour apparaître de nouveau lors d'une utilisation ultérieure du réservoir.

Une telle déformation permanente peut conduire à l'apparition de fissures ou de criques dans la paroi du liner, lesquelles peuvent provoquer une détérioration du réservoir et des fuites dangereuses.

Pour surmonter cet inconvénient, il a été proposé de réaliser des réservoirs composites pour gaz sous pression pourvus de chemins d'évacuation des gaz ayant traversé la paroi du liner vers l'extérieur.

Notamment, on connaît de l'état de l'art, un réservoir comportant une embase équipée d'un robinet, l'ensemble constitué de cette embase et de ce robinet comportant une zone d'évacuation des gaz ayant traversé la paroi du liner vers l'atmosphère, laquelle passe dans l'épaisseur du corps du robinet.

Or, la réalisation d'un tel ensemble embase/robinet est particulièrement laborieuse car elle requiert la création d'une pluralité d'ouvertures pour définir la zone d'évacuation, pour lesquelles il est nécessaire de s'assurer de leur mise en communication de fluide. Par ailleurs, cet ensemble nécessite la mise en oeuvre de pièces supplémentaires telles que plusieurs joints d'étanchéité.

Il en résulte un surcoût de fabrication et une grande complexité du réservoir.

En outre, cette zone d'évacuation des gaz débouche au niveau de la surface extérieure de l'embase en contact avec ou placé à proximité immédiate de l'enveloppe de renfort réalisée en matériau composite.

Or, on observe lors de la fabrication d'un tel réservoir, un fluage de la résine qui peut venir boucher la zone d'évacuation des gaz et rendre ainsi inopérante cette dernière.

La présente invention vise à pallier ces divers inconvénients de l'art antérieur en proposant un réservoir de stockage de gaz sous pression simple dans sa conception et dans son mode opératoire, économique et autorisant le remplissage, le stockage et le vidage d'un gaz sous pression sans risque de détérioration de celui-ci.

Un autre objet de la présente invention est un réservoir pourvu d'une zone d'évacuation des gaz ayant traversé la paroi du liner, qui est protégée de toute pollution extérieure au réservoir.

### BREVE DESCRIPTION DE L'INVENTION

A cet effet, l'invention concerne un réservoir destiné au stockage de milieux liquides ou gazeux sous pression, comprenant une enveloppe intérieure définissant une chambre de stockage, ladite enveloppe intérieure comprenant une ouverture, une embase placée au niveau de ladite ouverture pour assurer la connexion intérieur/extérieur dudit réservoir et une enveloppe de renforcement mécanique entourant au moins ladite enveloppe intérieure.

Selon l'invention,
- ladite embase comprend une première portion d'embase solidaire uniquement de ladite enveloppe intérieure et une deuxième portion d'embase solidaire uniquement de ladite enveloppe de renforcement mécanique, lesdites première et deuxième portions d'embase étant distinctes et non liées entre elles,
- l'espace séparant lesdites portions d'embase formant un évent assurant l'évacuation des gaz ayant traversé la paroi de l'enveloppe intérieure.

De préférence, cette embase est seulement formée de ladite première portion d'embase et de ladite deuxième portion d'embase, lesdites première et deuxième portions d'embase étant configurées pour coopérer en vue de former ladite embase.

Bien entendu, cet évent est en communication de fluide avec l'espace, ou interstice, séparant la surface externe de ladite enveloppe intérieure de la surface interne de ladite enveloppe de renforcement du réservoir de stockage de manière à assurer l'évacuation des gaz ayant traversé la paroi de l'enveloppe intérieure.

L'évent qui est ainsi formé dans l'épaisseur de l'embase, est interne au corps de l'embase et débouche à ses deux extrémités sur des zones extérieures de l'embase qui ne sont pas en communication avec l'enveloppe de renforcement mécanique.

On empêche ainsi avantageusement tout risque d'obstruction du ou des évents lors de la fabrication du réservoir.

La surface inférieure de l'embase est, par ailleurs, placée en vis-à-vis d'une surface de contact de l'enveloppe intérieure de sorte que cette dernière est placée sous l'embase.

Cette embase peut être entièrement métallique ou en alliage, ou comporter un insert métallique ou en alliage recouvert au moins en partie d'une interface plastique pour faciliter l'assemblage de l'enveloppe intérieure et de l'embase.

Alternativement, cette embase peut être réalisée en matière plastique ou en matière plastique renforcée. A titre d'exemple purement illustratif, la matière plastique est renforcée avec des fibres courtes ou longues ou encore broyées, ou avec des billes. Ces fibres et ces billes peuvent être en verre ou en carbone.

Une telle embase permet ainsi avantageusement :
- d'évacuer de manière aisée les gaz ayant traversé la paroi de l'enveloppe intérieure au niveau du canal intérieur de l'embase, lequel débouche sur l'extérieur du réservoir, et
- d'éviter toute dégradation de la résistance mécanique du réservoir même en cas de vidage accéléré de son contenu.

On a également avantageusement observé que le design original du réservoir de la présente invention permettait de réduire de manière significative les pics d'émission de gaz ayant traversé la paroi du liner, lors du remplissage du réservoir par rapport au pic d'émission relevé lors du remplissage d'un réservoir présentant un liner collapsé avec des poches de gaz stockées entre le liner et le composite.

La réduction de ce pic d'émission de gaz s'accompagne d'une réduction d'émission du bruit lié au collapse du liner (déformation du liner, arrachement à l'interface liner/composite) ainsi qu'à l'évacuation brutale d'une grande quantité de gaz.

L'enveloppe de renforcement mécanique est disposée sur au moins une partie de l'enveloppe intérieure en entourant celle-ci.

Le présent réservoir trouve des applications dans les domaines mettant en oeuvre des récipients de stockage sous pression tels que l'automobile, l'aéronautique, ...

Dans différents modes de réalisation particuliers de ce réservoir, chacun ayant ses avantages particuliers et susceptibles de nombreuses combinaisons techniques possibles:
- les premier et second éléments d'embase sont métalliques tels qu'en aluminium ou en inox, mais peuvent également être réalisés en matière plastique et/ou en plastique renforcé de fibres.
- l'enveloppe intérieure comporte une ouverture à ses deux extrémités, chacune de ses extrémités recevant une embase.

A titre d'exemple purement illustratif, une première de ces embases comprend un raccord tel qu'un robinet, l'autre extrémité comportant un élément choisi dans le groupe comprenant un robinet, un capteur de pression et/ou de température et/ou d'humidité, un accéléromètre, un dispositif de sécurité, un dispositif de sécurité de type PRD ("Pressure Relief Device" - "Dispositif de détente "), un dispositif de sécurité de type TPRD ("Thermal Pressure Relief Device" - "Dispositif de détente thermique") et des combinaisons de ces éléments.

Alternativement, l'enveloppe intérieure comporte à une de ses extrémités une ouverture, l'autre extrémité étant fermée et l'extrémité ouverte reçoit une embase.
- cette embase comportant une partie de col cylindrique creux définissant un canal intérieur et une partie annulaire, chaque portion d'embase comporte une portion de cette partie de col et une portion de cette partie annulaire de l'embase, ces portions de partie de col définissant chacune un canal intérieur, ou encore une ouverture, lesquels sont coaxiaux ou non,
- cette embase est uniquement métallique ou en alliage ou comporte un insert métallique ou en alliage dont une partie au moins de sa surface est recouverte d'une interface plastique, au moins une portion de la surface inférieure de ladite partie annulaire adjacente audit canal étant non recouverte par ladite interface plastique.
- au moins dans la position dite de réservoir plein où ladite enveloppe intérieure est remplie et sous pression, les canaux desdites portions de partie de col sont non communicants.

En d'autres termes, lesdits canaux ne débouchent pas l'un dans l'autre.

De préférence, l'extrémité libre de la portion de partie de col de la première portion d'embase est de niveau, c'est-à-dire affleurant, ou placé au dessus de l'extrémité libre de la portion de la partie de col de la deuxième portion d'embase.
- ces canaux débouchent l'un dans l'autre.

De préférence, ces canaux sont alors coaxiaux.
- ladite deuxième portion d'embase étant fixe, ladite première portion d'embase est mobile par rapport à ladite deuxième portion d'embase entre une première position dite de réservoir plein où ladite enveloppe intérieure étant remplie et sous pression, ladite première portion d'embase est au moins partiellement en contact avec ladite deuxième portion d'embase, et une seconde position dite réservoir vide, où ladite enveloppe intérieure étant vide de son contenu, l'extrémité libre de la portion de partie de col de ladite première portion d'embase est entourée au moins en partie par la portion de partie de col de la seconde portion d'embase de sorte que lesdites portions de partie de col desdites portions d'embase restent engagées au moins partiellement l'une dans l'autre.

Bien entendu, la première portion d'embase peut explorer n'importe quelle position entre ces deux positions extrêmes en fonction de l'état de vidage de l'enveloppe intérieure.

De même, dans la seconde position dite de réservoir vide, la portion de ladite partie annulaire de la première portion d'embase est placée à distance de la portion de ladite partie annulaire de la seconde portion d'embase. Avantageusement, la première portion d'embase comporte une portion de partie de col mâle conique et la seconde portion d'embase comporte une portion de partie de col femelle conique, lesdites portions de partie de col coniques coopérant entre elles pour définir ladite partie de col de ladite embase.

De manière avantageuse, cette forme tronconique des portions de partie de col des première et seconde portions d'embase autorise un guidage de la première portion d'embase lors de son déplacement par rapport à la seconde portion d'embase fixe.

De plus, cette forme tronconique des portions de partie col des portions d'embase permet avantageusement de reporter une partie des efforts s'appliquant sur la première portion d'embase mobile et liés à la pression interne de l'enveloppe intérieure, sur la portion de partie de col femelle conique de la seconde portion d'embase.

On constate ainsi une diminution significative des contraintes s'appliquant sur la partie annulaire de l'embase.

De manière plus générale, il existe une zone de la partie de col de l'embase pour laquelle le diamètre extérieur de la portion de partie de col de la première portion d'embase diminue dans le sens d'évacuation des gaz, c'est-à-dire en allant vers l'orifice de sortie du réservoir, tandis que le diamètre intérieur de la portion de partie de col de la seconde portion d'embase diminue en allant dans le même sens d'évacuation des gaz.

A titre purement illustratif, la portion de partie de col de la première portion d'embase présente une forme évasée en allant de l'orifice de sortie du réservoir vers l'enveloppe intérieure, cette forme pouvant être tronconique, conique, arrondie, ...
- le réservoir comporte au moins un moyen formant butée pour empêcher le désengagement desdites portions d'embase,
- le réservoir comporte un moyen de blocage en rotation desdites portions d'embase entre elles.

Ce moyen de blocage peut être réalisé en vue de limiter la rotation d'une portion d'embase par rapport à l'autre portion d'embase.

A titre d'exemple, il est ainsi possible de connecter le raccord sur la première portion d'embase solidaire de l'enveloppe intérieure sans que cette portion d'embase n'effectue une rotation par rapport à la deuxième portion d'embase.
- au moins une partie de la surface inférieure de ladite partie annulaire comporte une ou plusieurs rainures débouchant à une de leurs extrémités dans ledit au moins un évent et à leur autre extrémité à la périphérie de ladite partie annulaire de manière à former des chemins de collecte et d'évacuation des gaz piégés,
- ladite enveloppe intérieure est métallique ou en matière plastique,
- ladite partie annulaire de l'embase a un profil effilé en triangle ou sensiblement en triangle vers sa périphérie,
- ledit réservoir est équipé d'un joint d'étanchéité ou d'un bouchon pour éviter toute pollution de l'espace séparant la surface externe de ladite enveloppe intérieure et la surface interne de ladite enveloppe de renforcement du réservoir de stockage.

De manière avantageuse, un tel bouchon faisant office de cache-poussière, empêche toute pollution de l'espace séparant la surface externe de ladite enveloppe intérieure et la surface interne de ladite enveloppe de renforcement du réservoir de stockage, lorsque le réservoir de stockage n'est pas en service.

De même, un joint d'étanchéité placé à l'extrémité du col et en contact avec un raccord assure cette fonction lorsque le réservoir est en service.
- le réservoir est rempli avec un gaz ou un mélange de gaz.

A titre purement illustratif, ce gaz peut être de l'air, l'azote, l'hélium, l'hydrogène ou autre.

La présente invention concerne également un moyen de transport équipé d'au moins un réservoir tel que décrit précédemment.

Ce moyen de transport peut être un aéronef ou un véhicule tel qu'un camion ou une automobile.

La présente invention concerne encore l'utilisation du réservoir tel que décrit précédemment comme source d'alimentation en gaz ou en combustible.

Un tel réservoir peut être mis en oeuvre en tant que source d'alimentation stationnaire ou embarquée à bord d'un moyen de transport.

A titre purement illustratif, un tel réservoir peut être utilisé comme source d'alimentation pour une pile à combustible ou encore dans une installation de remplissage ou de distribution telle qu'une station-service.

La présente invention concerne encore l'utilisation du réservoir tel que décrit précédemment comme accumulateur d'énergie.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 représente schématiquement un réservoir destiné au stockage de gaz sous pression selon un premier mode de réalisation de la présente invention,
- la figure 2 est une vue élargie et partielle de l'extrémité dudit réservoir de la Fig. 1,
- la figure 3 est une vue partielle et en coupe d'un réservoir destiné au stockage de gaz sous pression selon un deuxième mode de réalisation de la présente invention, le réservoir étant plein,
- la figure 4 montre le réservoir de la Fig. 3 après que celui-ci ait été utilisé, l'enveloppe intérieure étant vidée de son gaz.
- la figure 5 est une vue partielle et en coupe d'un réservoir destiné au stockage de gaz sous pression selon un troisième mode de réalisation de la présente invention, le réservoir étant plein,
- la figure 6 montre le réservoir de la Fig. 5 après que celui-ci ait été utilisé, l'enveloppe intérieure étant vidée de son gaz.
- la figure 7 est une vue partielle et en coupe d'un réservoir destiné au stockage de gaz sous pression selon un quatrième mode de réalisation de la présente invention, le réservoir étant plein,
- la figure 8 montre le réservoir de la Fig. 7 après que celui-ci ait été utilisé, l'enveloppe intérieure étant vidée de son gaz.

### DESCRIPTION DETAILLEE DE MODES DE REALISATION DE L'INVENTION

Tout d'abord, on note que les figures ne sont pas à l'échelle.

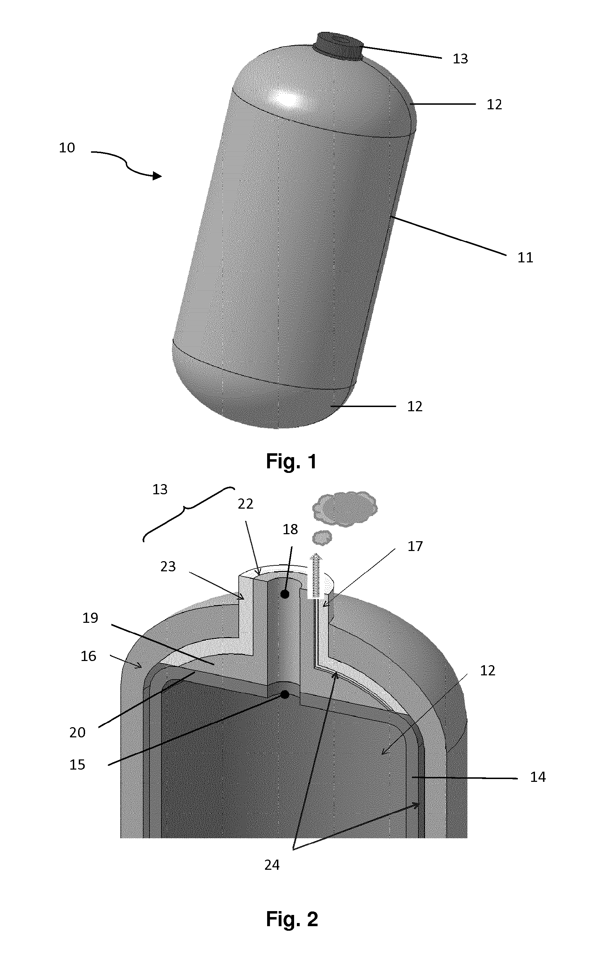

Les Figures 1 et 2 décrivent un réservoir destiné au stockage de gaz sous pression selon un premier mode de réalisation de la présente invention.

Ce réservoir 10 comporte une partie centrale 11 sensiblement cylindrique fermée à ses deux extrémités par des dômes 12. Un de ces dômes 12 est pourvu d'une embase 13 pour assurer la connexion intérieur/extérieur du réservoir, et par conséquent, le remplissage en gaz et le vidage. A cet effet, cette embase 13 est notamment destiné à recevoir un raccord tel qu'un robinet, une vanne ou encore un tuyau.

Le réservoir 10 comporte une enveloppe interne 14 étanche, encore appelée liner, définissant une chambre de stockage dans laquelle un gaz sous pression est destiné à être stocké. Ce liner 14 comporte à une de ses extrémités une ouverture 15 circulaire. Le liner 14 est ici constitué d'un polymère tel que du polyamide, du polyéthylène de haute densité (HDPE), du polyuréthane (PU), ...

Le liner 14 est également entouré d'une enveloppe 16 de renforcement mécanique destinée à renforcer mécaniquement le réservoir pour supporter la pression du gaz stocké dans la chambre de stockage.

Cette enveloppe 16 de renforcement est, par exemple, réalisée dans un matériau composite obtenu par enroulement filamentaire de fibres unidirectionnelles imprégnées de résine. Chaque couche est orientée par rapport à l'axe longitudinal du réservoir d'un angle de bobinage. On utilise de préférence des fibres longues qui assurent une meilleure résistance face aux déformations successives et répétitives, par exemple des fibres de verre ou de carbone liées entre elles par une résine telle qu'une résine époxy.

L'embase 13 comporte une partie de col 17 cylindrique creux définissant un canal 18 intérieur et une partie annulaire 19 s'étendant à partir de la partie inférieure de la partie de col 17.

Cette partie annulaire 19 comprend une surface inférieure 20, cette surface inférieure constituant la surface inférieure de l'embase 13, laquelle est placée en vis-à-vis d'une surface de contact 21 du liner 14.

Cette embase 13 est, par ailleurs, formée d'un premier 22 élément d'embase solidaire uniquement du liner 14 et d'un second 23 élément d'embase, distinct du premier 22 élément d'embase et solidaire de la seule enveloppe 16 de renforcement mécanique. Ces éléments d'embase 22, 23 présentent une géométrie assurant avantageusement une coopération de leurs formes pour former l'embase.

L'embase 13 est réalisée dans un matériau métallique ou en alliage. A titre purement illustratif, elle est ici réalisée en acier. Alternativement, les éléments d'embase 22, 23 constituant l'embase 13 sont réalisés dans des matériaux différents.

Les deux éléments d'embase 22, 23 du réservoir sont non liés entre eux de sorte que le second 23 élément d'embase étant fixe car lié à l'enveloppe 16 de renforcement mécanique, le premier 22 élément d'embase se déplace par rapport au second 23 élément d'embase lorsque la chambre de stockage est vidée de son contenu.

Par ailleurs, chaque élément d'embase 22, 23 comprenant une portion de la partie de col 17 de l'embase 13 ainsi qu'une portion de la partie annulaire 19 de cette embase, chaque portion de col de ces éléments d'embase 22, 23 qui est ici cylindrique creux, définit un canal intérieur distinct ayant un axe principal.

Ces canaux intérieurs des portions de col des éléments d'embase 22, 23 sont coaxiaux tandis que les extrémités supérieures de ces portions de col sont de niveau, ou encore affleurant, lorsque la chambre de stockage est remplie et sous pression. Ainsi, ces canaux intérieurs ne débouchent pas l'un dans l'autre dans lorsque la chambre de stockage est dans sa position dite de réservoir plein.

Pour autoriser le déplacement du premier 22 élément d'embase par rapport au second 23 élément d'embase, le raccord (non représenté) destiné à être reçu en partie dans le canal 18 intérieur de l'embase, est fixé ou intégré uniquement à la portion de col du premier 22 élément d'embase.

Néanmoins, ces premier et second éléments d'embase sont configurés de sorte que lorsque la chambre de stockage du réservoir est vidée de son contenu, la portion de col du premier 22 élément d'embase reste engagée dans la portion de col du second 23 élément d'embase.

L'espace séparant les premier et second éléments d'embase 22, 23 définit un évent 24 assurant l'évacuation des gaz ayant traversé la paroi du liner 14. Bien entendu, cet évent 24 est en communication de fluide avec l'espace, ou interstice, séparant la surface externe du liner 14 de la surface interne de l'enveloppe 16 de renforcement.

On constate avantageusement que ce réservoir simple dans sa conception et dans son mode opératoire, assure une évacuation efficace des gaz ayant traversé la paroi du liner 14.

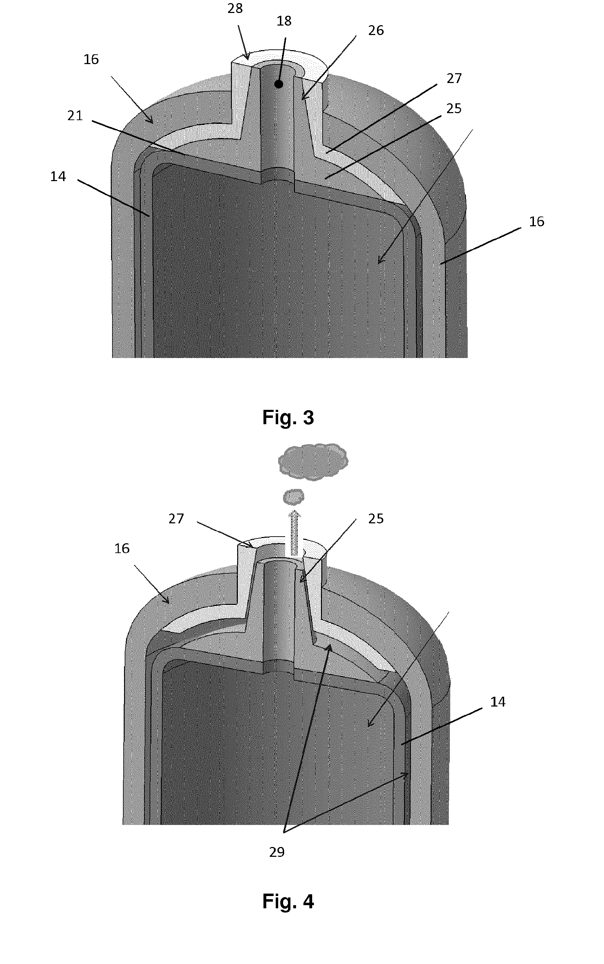

Les Figures 3 et 4 montrent un réservoir de stockage de gaz sous pression selon un deuxième mode de réalisation de la présente invention. Par souci de concision, les éléments des Figures 3 et 4 portant les mêmes références que les éléments des Figures 1 et 2 représentent les mêmes objets, lesquels ne seront pas décrits de nouveau ci-après.

Le réservoir des Figures 3 et 4 se distingue de celui des Figures 1 et 2 en ce que le premier 25 élément d'embase uniquement solidaire du liner 14 présente une portion de col 26 mâle conique tandis que le second 27 élément d'embase, distinct du premier 26 élément d'embase et solidaire unique de l'enveloppe 16 de renforcement mécanique, comporte une portion de col 28 femelle conique.

Cette géométrie des portions de col 27, 28 assure avantageusement un guidage de ces portions de col 26, 28 l'une dans l'autre lors du remplissage de la chambre de stockage.

L'évent 29 est donc ici formé par l'espace séparant les premier et deuxième éléments d'embase 25, 27.

Cet évent 29 est de géométrie évolutive lorsque la chambre de stockage est vidée de son contenu ou remplie et mise sous pression.

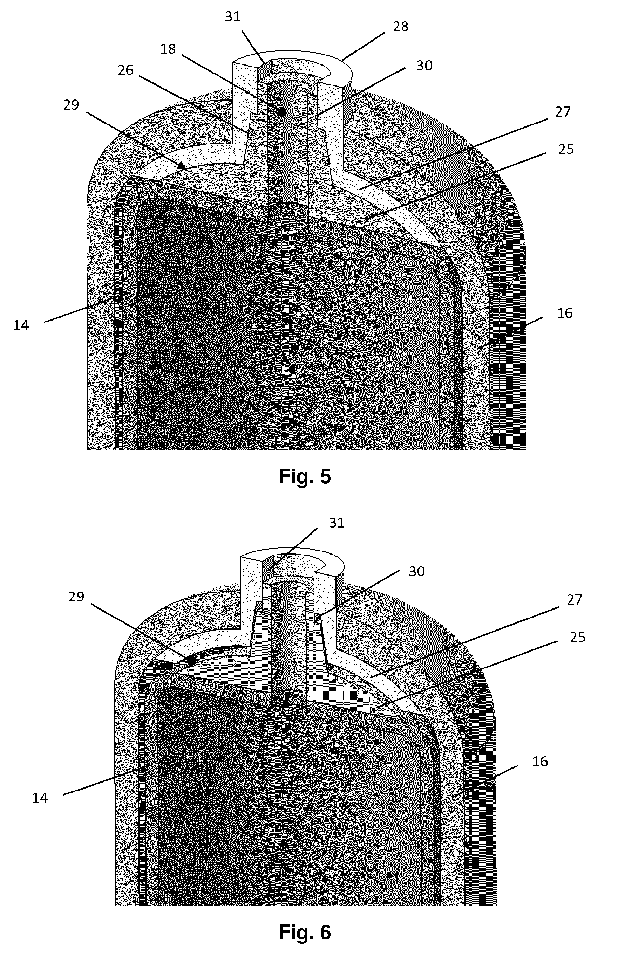

Les Figures 5 et 6 montrent un réservoir de stockage de gaz sous pression selon un troisième mode de réalisation de la présente invention. Par souci de concision, les éléments des Figures 5 et 6 portant les mêmes références que les éléments des Figures 3 et 4 représentent les mêmes objets, lesquels ne seront pas décrits de nouveau ci-après.

Le réservoir des Figures 5 et 6 se distingue de celui des Figures 3 et 4 en ce que :
- d'une part, le premier 25 élément d'embase uniquement solidaire du liner 14 comporte dans la partie supérieure de sa portion de col 26 tronconique, et sur sa surface externe, des découpes 30 à angle droit, ou méplats, définissant latéralement sur la surface extérieure de ladite portion de col 26, deux faces planes, et
- d'autre part, le second 27 élément d'embase, distinct du premier 25 élément d'embase et solidaire de la seule enveloppe 16 de renforcement mécanique, comporte dans la partie supérieure de sa portion de col 28 tronconique, et sur la surface intérieure de cette portion de col 28, des découpes 31 à angle droit, ou méplats dont la forme coopère avec celle des découpes 30 de la portion de col 26 du premier élément d'embase 25 pour bloquer en rotation les éléments d'embase 25, 27 entre eux.

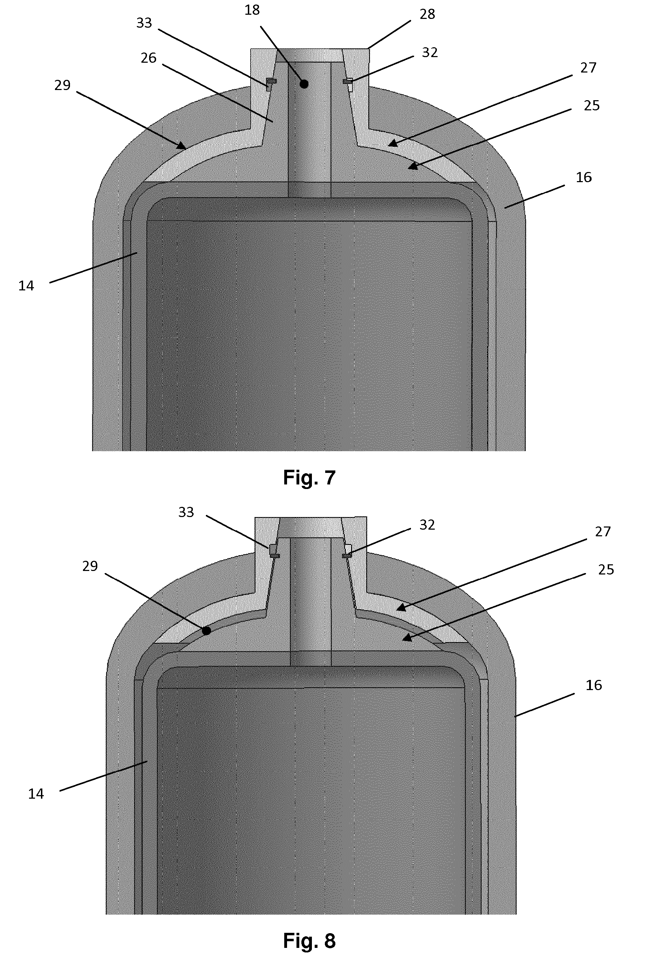

Les Figures 7 et 8 montrent un réservoir de stockage de gaz sous pression selon un quatrième mode de réalisation de la présente invention. Par souci de concision, les éléments des Figures 7 et 8 portant les mêmes références que les éléments des Figures 3 et 4 représentent les mêmes objets, lesquels ne seront pas décrits de nouveau ci-après.

Le réservoir des Figures 7 et 8 se distingue de celui des Figures 3 et 4 en ce que :
- d'une part, le premier 25 élément d'embase uniquement solidaire du liner 14 comporte dans la partie supérieure de sa portion de col 26 tronconique, et sur sa surface externe, un anneau élastique 32 entourant ladite portion de col 26, et
- d'autre part, le second 27 élément d'embase, distinct du premier 25 élément d'embase et solidaire de la seule enveloppe 16 de renforcement mécanique, comporte dans la partie supérieure de sa portion de col 28 tronconique, et sur la surface intérieure de cette portion de col 28, une gorge 33 recevant ledit anneau élastique 32 et dont l'épaisseur de la gorge 33 détermine la course de déplacement du premier 25 élément d'embase par rapport au second 27 élément d'embase.

Il est ainsi possible de bloquer en translation ledit premier 25 élément d'embase tout en guidant son déplacement.

Alternativement, il pourrait encore être possible de bloquer en translation le premier 25 élément d'embase par le biais du raccord destiné à être fixé dans le canal 18 de l'embase. Ce raccord qui présenterait, à cet effet, une section en forme de T, aurait un diamètre extérieur de tête de ce bouchon supérieur au diamètre du canal 18 de sorte que cette tête venant prendre appui sur le rebord supérieur du second 27 élément d'embase lors du vidage du réservoir, il empêcherait le premier 25 élément d'embase de se déplacer davantage.

## Revendications

1. Réservoir destiné au stockage de milieux liquides ou gazeux sous pression, comprenant une enveloppe (14) intérieure définissant une chambre de stockage, ladite enveloppe (14) intérieure comprenant une ouverture (15), une embase (13) placée au niveau de ladite ouverture (15) pour assurer la connexion intérieur/extérieur dudit réservoir et une enveloppe (16) de renforcement mécanique entourant au moins ladite enveloppe (14) intérieure, **caractérisé en ce que**
- ladite embase (13) comprend une première (22, 25) portion d'embase solidaire uniquement de ladite enveloppe (14) intérieure et une deuxième (23, 27) portion d'embase solidaire uniquement de ladite enveloppe (16) de renforcement mécanique, lesdites première et deuxième portions d'embase étant distinctes et non liées entre elles,
- l'espace séparant lesdites portions d'embase formant un évent assurant l'évacuation des gaz ayant traversé la paroi de l'enveloppe (14) intérieure.

2. Réservoir selon la revendication 1, **caractérisé en ce que** ladite embase (13) comportant une partie de col cylindrique creux définissant un canal intérieur et une partie annulaire, chacune desdites portions d'embase comporte une portion de ladite partie de col et une portion de ladite partie annulaire de ladite embase (13), lesdites portions de partie de col définissant chacune un canal intérieur, lesquels sont coaxiaux ou non.

3. Réservoir selon la revendication 2, **caractérisé en ce qu'**au moins dans la position dite de réservoir plein où ladite enveloppe (14) intérieure est remplie et sous pression, les canaux desdites portions de partie de col sont non communicants.

4. Réservoir selon l'une quelconque des revendications 1 à 3, **caractérisé en ce que** l'extrémité libre de la portion de partie de col de la première (22, 25) portion d'embase est de niveau ou placé au dessus de l'extrémité libre de la portion de la partie de col de la deuxième (23, 27) portion d'embase.

5. Réservoir selon la revendication 2, **caractérisé en ce que** lesdits canaux débouchent l'un dans l'autre.

6. Réservoir selon l'une quelconque des revendications 2 à 5, **caractérisé en ce que** ladite deuxième (23, 27) portion d'embase étant fixe, ladite première (22, 25) portion d'embase est mobile par rapport à ladite deuxième (23, 27) portion d'embase entre une première position dite de réservoir plein où ladite enveloppe (14) intérieure étant remplie et sous pression, ladite première (22, 25) portion d'embase est au moins partiellement en contact avec ladite deuxième (23, 27) portion d'embase, et une seconde position dite réservoir vide, où ladite enveloppe (14) intérieure étant vide de son contenu, l'extrémité libre de la portion de partie de col de ladite première (22, 25) portion d'embase est entourée au moins en partie par la portion de partie de col de la seconde portion d'embase de sorte que lesdites portions de partie de col desdites portions d'embase restent engagées au moins partiellement l'une dans l'autre.

7. Réservoir selon la revendication 6, **caractérisé en ce que** la première (22, 25) portion d'embase comporte une portion de col mâle conique et la deuxième (23, 27) portion d'embase comporte une portion de col femelle conique, lesdites portions de col coniques coopérant entre elles pour définir ladite partie de col de ladite embase.

8. Réservoir selon l'une quelconque des revendications 1 à 7, **caractérisé en ce qu'**il comporte au moins un moyen formant butée pour empêcher le désengagement desdites portions d'embase.

9. Réservoir selon l'une quelconque des revendications 1 à 8, **caractérisé en ce qu'**il comporte un moyen de blocage en rotation desdites portions d'embase (22, 23) entre elles.

10. Réservoir selon l'une quelconque des revendications 1 à 9, **caractérisé en ce qu'**au moins une partie de la surface inférieure comporte une ou plusieurs rainures débouchant à une de leurs extrémités dans ledit un évent et à leur autre extrémité à la périphérie de ladite partie annulaire de manière à former des chemins de collecte et d'évacuation des gaz piégés.

11. Réservoir selon l'une quelconque des revendications 1 à 10, **caractérisé en ce que** ladite enveloppe (14) intérieure est métallique ou en matière plastique.

12. Réservoir selon l'une quelconque des revendications 1 à 11, **caractérisé en ce qu'**il est rempli avec un gaz ou un mélange de gaz.

13. Moyen de transport équipé d'au moins un réservoir selon l'une quelconque des revendications 1 à 12.

14. Utilisation du réservoir selon l'une quelconque des revendications 1 à 12 comme source d'alimentation en gaz ou en combustible.

15. Utilisation du réservoir selon l'une quelconque des revendications 1 à 12 comme accumulateur d'énergie
